Europäisches Patentamt

European Patent Office

Office européen des brevets

(19)

(11) Veröffentlichungsnummer : **0 387 575 B1**

# (12) EUROPÄISCHE PATENTSCHRIFT

(45) Veröffentlichungstag der Patentschrift :
**17.06.92 Patentblatt 92/25**

(51) Int. Cl.$^5$ : **C01G 49/06, C09C 1/24**

(21) Anmeldenummer : **90103639.2**

(22) Anmeldetag : **25.02.90**

(54) **Verfahren zur Herstellung von Eisenoxidgelb-Pigmenten.**

(30) Priorität : **11.03.89 DE 3907910**

(43) Veröffentlichungstag der Anmeldung :
**19.09.90 Patentblatt 90/38**

(45) Bekanntmachung des Hinweises auf die
Patenterteilung :
**17.06.92 Patentblatt 92/25**

(84) Benannte Vertragsstaaten :
**DE ES FR GB IT NL**

(56) Entgegenhaltungen :
**DE-A- 2 045 561**
**US-A- 1 327 061**
**US-A- 3 843 773**
**US-A- 4 221 766**

(56) Entgegenhaltungen :
**CHEMICAL ABSTRACTS, Band 105, Nr. 24,
Dezember 1986, Seite 133, Zusammenfassung
Nr. 211222y, Columbus, Ohio, US; &JP-A-61
186 225 (SUMITOMO ALUMINIUM SMELTING
CO., LTD) 19-08-1986**

(73) Patentinhaber : **BAYER AG**
**W-5090 Leverkusen 1 Bayerwerk (DE)**

(72) Erfinder : **Kröckert, Bernd, Dr.**
**Brauerstrasse 14**
**W-4230 Wesel (DE)**
Erfinder : **Printzen, Helmut, Dr.**
**Heckschenstrasse 93**
**W-4150 Krefeld 1 (DE)**
Erfinder : **Buxbaum, Gunter, Dr.**
**Holzapfelweg 2**
**W-4150 Krefeld 1 (DE)**

EP 0 387 575 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zur Herstellung von Eisenoxidgelb-Pigmenten nach dem Penniman-Verfahren, bei dem aus Eisen-(II)-Salzlösungen in Gegenwart von Eisenschrott durch Einblasen von Luft bei erhöhter Temperatur Goethit hergestellt wird.

Eisenoxidgelb-Pigmente lassen sich nach dem Fällverfahren, dem Penniman-Verfahren oder dem Anilinverfahren herstellen (Winnacker-Küchler, Chemische Technologie, 4. Auflage, 1983, Band 3, Anorg. Technologie II, S. 376-380).

Bei dem Verfahren von Penniman und Zoph (US-A 1 327 061 und US-A 1 368 748) werden metallisches Eisen, in Form von Schrott, ein Eisen-II-Salz und $\alpha$-FeOOH als Keim suspendiert. Durch die Begasung mit Luft oder Sauerstoff werden die Fe-II-Ionen oxidiert. Bei der Hydrolyse der entstehenden Fe-III-Ionen während des Pigmentaufbaus entstehen als Folge Protonen, die das vorgelegte Eisen auflösen und Fe-II-Ionen bilden. Dies bedeutet, daß das vorgelegte Eisen zu Eisenoxidpigment umgewandelt wird und daß die Fe-II-Ionen im Idealfall nur katalytisch wirken.

Aus ökologischer Sicht ist das Verfahren immer dem Fällverfahren vorzuziehen, da bei der Fällung mit Basen die dem Pigment äquimolare Menge an Salz gebildet wird und so eine größere Salzlast die Folge ist.

Für die Begasung und das Rühren der Pigmentsuspensionen im Penniman-Verfahren bieten sich verschiedene Reaktortypen und Begasungsarten an (US-A 2 111 726, DD-A 208 599 und US-A 1 327 061). Der Nachteil bei der großtechnischen Anwendung aller Reaktortypen und Begasungssysteme resultiert aber daraus, daß das metallische Eisen zwangsläufig als Haufen oder in Form von Paketen im Reaktor eingesetzt wird. Als Folge der Anhäufung von Metall im großtechnischen Prozeß wird eine Magnetitbildung in wenig oder nicht durchspülten Bereichen des Schrotts beobachtet. Somit war die Bildung farbreiner Gelbpigmente bisher nicht möglich, da schon geringe Mengen des schwarzen Magnetits die Farben des angestrebten gelben Goethits verschlechterten. Eine ideale Durchmischung in der Reaktionssuspension ist technisch kaum realisierbar.

Aufgabe dieser Erfindung ist es also, ein Verfahren zur Verfügung zu stellen, welches die beschriebenen Nachteile nicht aufweist.

Überraschenderweise war dies schon dadurch möglich, daß nach beendetem Pigmentaufbau die Suspension mehrere Stunden bei etwa gleicher Temperatur und unter Rühren, aber ohne weitere Begasung durchmischt wurde. Vergleicht man die Farbe der Pigmente vor und nach diesem Verfahrensschritt, so erkennt man, daß eine wesentlich hellere und gesättigtere Farbe nach der Durchmischung ohne weitere Begasung vorliegt. Deutlich ist der Effekt auch, wenn die fertige Suspension vom Restmetall in eine andere Vorlagebütte gepumpt wird. Das Rühren der heißen Suspension ohne Begasung führt hier zu deutlich reineren Gelbpigmenten.

Gegenstand dieser Erfindung ist somit ein Verfahren zur Herstellung von Eisenoxidgelb-Pigmenten nach dem Penniman-Verfahren bei dem aus Eisen-(II)-Salzlösungen in Gegenwart von Eisenschrott durch Einblasen von Luft bei erhöhter Temperatur Goethit hergestellt wird, wobei nach beendetem Pigmentaufbau die Reaktionssuspension ohne Begasung bei der Reaktionstemperatur 0,5 bis 20 h, vorzugsweise 1 bis 10, gerührt wird.

Eine bevorzugte Verfahrensvariante besteht darin, daß der Kohlenstoffgehalt des eingesetzten Schrotts < 1 %, bevorzugt < 0,5 %, berechnet als C, beträgt. Höhere Kohlenstoffgehalte führen zu schmutzigen Gelbpigmenten. Als Eisen-II-Salze werden üblicherweise $FeSO_4$ oder $FeCl_2$ eingesetzt.

Das katalytisch wirkende Eisensulfat wird nach beendetem Pigmentaufbau mit Basen ausgefällt (US-A 4 221 766). Die anfallende Salzmenge wird somit durch die eingesetzte Eisensulfatmenge bestimmt und kann vorzugsweise von 5 g/l bis 100 g/l $FeSO_4$, besonders bevorzugt 10 g/l bis 50 g/l $FeSO_4$, variiert werden. Entsprechendes gilt für $FeCl_2$.

Eine bevorzugte Ausführungsform des erfindungsgemäßen Verfahrens ist dadurch gekennzeichnet, daß zu Beginn nadelförmige $\alpha$-FeOOH-Keime in einer Konzentration von 0,5 bis 30 g/l FeOOH, bevorzugt 1 bis 20 g/l FeOOH, vorgelegt werden.

Nicht-silkende Eisenoxidgelb-Pigmente, deren Herstellung in den DE-A 3 326 632 und DE-A 3 716 300 beschrieben ist, können ebenfalls als Keimmaterial eingesetzt werden. Eine weitere bevorzugte Ausführungsform des erfindungsgemäßen Verfahren besteht somit darin, daß zu Beginn nicht-silkendes $\alpha$-FeOOH in einer Konzentration von 10 bis 100 g/l FeOOH, bevorzugt von 20 bis 80 g/l FeOOH, vorgelegt wird.

Gemäß der vorliegenden Erfindung wird somit eine Verbesserung des Penniman-Verfahrens möglich, die es ermöglicht, schwarzen Magnetit, der bei der großtechnischen Produktion von Goethit nach dem Penniman-Verfahren im Gemisch anfällt, aus dem Gelbpigment zu entfernen, um so farbreine Gelbpigmente zu erhalten.

Die Bestimmung der Fe-II- und Fe-III-Gehalte in den nachfolgenden Beispielen erfolgte durch die üblichen naßchemischen Methoden

Der Kohlenstoff wurde als $CO_2$ in einer Infrarotzelle quantitativ bestimmt.

Die Farbtöne aller Proben sind in Alkydal® F 48, Handelsprodukt der Bayer AG, einem mittelöligen Alkydharz bei einer Pigmentvolumenkonzentration von 10 % gemäß DIN 6174 (äquivalent ISO DIN 7724, 1-3 drafts) ermittelt. Die farbmetrisch ermittelten Werte sind Delta-Werte und zeigen immer den Unterschied von der ungerührten zur nachgerührten Probe an. Positive Werte für $\Delta L*$, Helligkeit, und $\Delta C*$, Sättigung, geben ein koloristische Verbesserung des Pigments an.

Nachfolgend wird die Erfindung beispielhaft beschrieben, worin jedoch keine Einschränkung zu sehen ist.

## Beispiel 1

Entsprechend dem Penniman-Verfahren werden Eisenoxidgelb-Pigmente hergestellt. In einer 1000-m³-Bütte, die mit 100 t Eisenschrott (C = 0,12 %) und 700 m³ Suspension gefüllt wurde, erfolgte der Pigmentaufbau. In der Suspension waren zu Beginn 45 g/l $FeSO_4$ und 5 g/l Goethit als Keim, der nach dem Fällverfahren aus einer Eisensulfatlösung mit Natronlauge und Begasung mit Luft hergestellt wurde (US-A 2 939 767), Beispiel 4). Nach 80 Std. Begasung mit 600 m³ /h Luft bei 85°C war das Pigment ausreichend aufgebaut. Ohne Begasung wurde die Suspension 6 Std. weiter durchmischt. Der koloristische Vergleich der Pigmente vor dem Nachrühren, nach 3 Std. und nach 6 Std. zeigt die stetige Verbesserung von Helligkeit $\Delta L*$ und Sättigung $\Delta C*$.

| Probe | g/l-$FeSO_4$ der Lö-sung | % FeO im Pig-ment | $\Delta L*$ | $\Delta a*$ | $\Delta b*$ | $\Delta C*$ |
|---|---|---|---|---|---|---|
| ohne Rühren | 40 | 0,37 | 0 | 0 | 0 | 0 |
| nach 3 h | 42 | 0,04 | 0,7 | 0,1 | 0,8 | 0,8 |
| nach 6 h | 45 | 0,02 | 1,2 | 0,7 | 1,8 | 1,9 |

## Beispiel 2

In einem 100-m³-Reaktor mit 10 t Eisenschrott (C= 0,12 %) wurden 70 m³ Suspension, bestehend aus 45 g/l $FeSO_4$ und 70 g/l sphärolithischem FeOOH, gegeben. Das sphärolithische FeOOH wurde hergestellt nach DE-A 3 716 300, Beispiel 4. 62,0 m³ techn. $FeSO_4$-Lösung (c = 201,0 g $FeSO_4$/l) und 2215 l techn. $Al_2(SO_4)_3$-Lösung (c = 1,00 Mol/l) wurden unter Rühren auf 30°C geheizt. Nach dem Aufheizen wurden 9,4 m³ techn. Natronlauge (c = 9,5 Mol/l) zugepumpt und bei gleichzeitiger Steigerung der Tempertur bis auf 45°C so lange unter Rühren mit 700 m³ Luft/h oxidiert, bis der pH-Wert ≤ 3,8 betrug. Zu 36,0 m³ dieser Gelbkeimsuspension wurden 80,0 m³ Wasser hinzugefügt und dann auf 75°C geheizt. Nach der Aufheizung fiel der pH-Wert auf ≤ 3,0. Anschließend wurden bei 75°C unter Rühren und Begasung mit 700 m³ Luft/h in ca. 16 Std. 26,0 m³ Natronlauge techn. (c = 5,00 Mol/l) und 37,0 m³ techn. $FeSO_4$-Lösung (c = 201,0 g $FeSO_4$/l) so zudosiert, daß der pH-Wert in der Suspension um 0,1 bis 0,2 Einheiten pro Std. bis pH = 3,8 steigt, dann konstant 4,0 ± 0,2 betrug. Für diesen Versuch wurde die Gelbkeimsuspension nur um den Faktor 5,2 vervielfacht und dann im Penniman-Verfahren eingesetzt.

Bei 85°C und 700 m³ Luft/h erfolgte in der Pennimann-Suspension 24 h ein Pimentaufbau. Ohne Begasung wurde die Suspension 16 Std. gerührt. Proben nach 8 und 16 Std. zeigen die koloristische Verbesserung der Pigmente an.

| Probe | g/l-$FeSo_4$ der Lö-sung | % FeO im Pig-ment | $\Delta L*$ | $\Delta a*$ | $\Delta b*$ | $\Delta C*$ |
|---|---|---|---|---|---|---|
| ohne Rühren | 37 | 0,26 | 0 | 0 | 0 | 0 |
| nach 8 h | 42 | 0,04 | 0,3 | 0,3 | 0,5 | 0,6 |
| nach 16 h | 48 | 0,03 | 0,7 | -0,1 | 0,7 | 0,7 |

3

Beispiel 3

Von einer fertigen Pigmentsuspension nach Beispiel 1 wurden 250 m³ Suspension in eine Bütte, die nicht mit Eisenschrott bestückt war, gepumpt. Die noch heiße Suspension wurde 6 h ohne Begasung gerührt. Die koloristische Verbesserung der Pigmente ergibt sich aus den Farbwerten.

| Probe | g/l-FeSo₄ der Lösung | % FeO im Pigment | ΔL* | Δa* | Δb* | ΔC* |
|---|---|---|---|---|---|---|
| ohne Rühren | 39 | 0,13 | 0 | 0 | 0 | 0 |
| nach 3 h | 41 | 0,03 | 0,1 | 0,2 | 0,4 | 0,4 |
| nach 6 h | 42 | 0,01 | 0,6 | 0,2 | 0,7 | 0,7 |

**Patentansprüche**

1. Verfahren zur Herstellung von Eisenoxidgelb-Pigmenten nach dem Penniman-Verfahren, bei dem aus Eisen (II) Salzlösungen in Gegenwart von Eisenschrott durch Einblasen von Luft bei erhöhter Temperatur Goethit hergestellt wird, dadurch gekennzeichnet, daß nach beendetem Pigmentaufbau die Reaktionssuspension ohne Begasung bei der Reaktionstemperatur 0,5 bis 20 h, vorzugsweise 1 bis 10, gerührt wird.

2. Verfahren gemäß Anspruch 1, dadurch gekennzeichnet, daß der Kohlestoffgehalt des eingesetzten Schrotts < 1 %, vorzugsweise <0,5 %, berechnet als C, beträgt.

3. Verfahren gemäß einem der Ansprüche 1 oder 2, dadurch gekennzeichnet, daß die Fe-(II)-Menge der Suspensionen zwischen 5 g/l und 100 g/l Fe-(II), vorzugsweise 10 g/l bis 50 g/l Fe-(II), berechnet als FeSO₄, beträgt.

4. Verfahren gemäß einem oder mehrerer der Ansprüche 1 bis 3, dadurch gekennzeichnet, daß zu Beginn nadelförmige α-FeOOH-Keime in einer Konzentration von 0,5 bis 30 g/l FeOOH, bevorzugt 1 bis 20 g/l FeOOH, vorgelegt werden.

5. Verfahren gemäß einem oder mehrerer der Ansprüche 1 bis 3, dadurch gekennzeichnet, daß zu Beginn nicht-silkendes α-FeOOH in einer Konzentration von 10 bis 100 g/l FeOOH, bevorzugt von 20 bis 80 g/l FeOOH, vorgelegt wird.

**Claims**

1. A process for the production of iron oxide yellow pigments by the Penniman process in which goethite is produced from iron(II) salt solutions in the presence of scrap iron by injection of air at elevated temperature, characterized in that, after formation of the pigment, the reaction suspension is stirred at the reaction temperature for 0. 5 to 20 h and preferably for 1 to 10 h without aeration.

2. A process as claimed in claim 1, characterized in that the carbon content of the scrap used is < 1% and preferably < 0.5%, expressed as C.

3. A process as claimed in claim 1 or 2, characterized in that the quantity of Fe(II) in the suspensions is between 5 g/l and 100 g/l Fe(II) and preferably between 10 g/l and 50 g/l Fe(II), expressed as FeSO₄.

4. A process as claimed in one or more of claims 1 to 3, characterized in that acicular α-FeOOH seeds are introduced at the beginning in a concentration of 0.5 to 30 g/l FeOOH and preferably in a concentration of 1 to 20 g/l FeOOH.

5. A process as claimed in one or more of claims 1 to 3, characterized in that non-silking α-FeOOH is introduced at the beginning in a concentration of 10 to 100 g/l FeOOH and preferably in a concentration of 20 to 80 g/l FeOOH.

**Revendications**

1. Procédé pour la fabrication de pigments d'oxyde jaune de fer selon le procédé Penniman, dans lequel on fabrique la goethite à température élevée à partir de solutions de sels de fer (II) en présence de grenaille de fer par injection d'air à température élevée, caractérisé en ce que la suspension de réaction est agitée après la fin de la synthèse de pigment à la température de réaction pendant 0,5 à 20 h, de préférence 1 à 10 h, sans injection de gaz.

2. Procédé selon la revendication 1, caractérisé en ce que la teneur en carbone de la grenaille utilisée est inférieure à 1%, de préférence à 0,5%, calculée en C.

3. Procédé selon la revendication 1 ou 2, caractérisé en ce que la quantité de fer (II) des suspensions est comprise entre 5 et 100 g/l de Fe (II), de préférence de 10 à 50 g/l de Fe (II), calculé en $FeSO_4$.

4. Procédé selon une ou plusieurs des revendications 1 à 3, caractérisé en ce que l'on charge au début des germes aciculaires de FeOOH $\alpha$ à une concentration de 0,5 à 30 g/l de FeOOH, de préférence de 1 à 20 g/l de FeOOH.

5. Procédé selon l'une quelconque des revendications 1 à 3, caractérisé en ce que l'on charge au début du FeOOH $\alpha$ non satinant à une concentration de 10 à 100 g/l de FeOOH, de préférence de 20 à 80 g/l de FeOOH.